(19) Europäisches Patentamt
European Patent Office
Office européen des brevets

(11) **EP 2 977 786 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(21) Anmeldenummer: **15173872.1**

(22) Anmeldetag: **25.06.2015**

(51) Int Cl.:
**G01S 17/10** (2006.01)       **G01S 7/48** (2006.01)
**G01S 7/486** (2006.01)       **G01S 17/88** (2006.01)
**G01S 17/89** (2006.01)       **G01B 11/02** (2006.01)
**G01V 8/12** (2006.01)        **G06M 7/04** (2006.01)
**G01C 3/08** (2006.01)

(54) **ENTFERNUNGSMESSENDER SENSOR ZUR ERFASSUNG UND ABSTANDSBESTIMMUNGEN VON OBJEKTEN**

DISTANCE MEASURING SENSOR FOR DETECTING AND RANGING OBJECTS

CAPTEUR TELEMETRIQUE DESTINE A LA DETECTION ET LA DETERMINATION DE L'ELOIGNEMENT D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2014 DE 102014110203**

(43) Veröffentlichungstag der Anmeldung:
**27.01.2016 Patentblatt 2016/04**

(73) Patentinhaber: **SICK AG**
**79183 Waldkirch (DE)**

(72) Erfinder:
• **Nutz, Patrick**
  **79111 Freiburg (DE)**
• **Kunze, Timo**
  **79106 Freiburg (DE)**
• **Martin, Fischer**
  **77887 Sasbachwalden (DE)**

(56) Entgegenhaltungen:
**EP-A1- 2 180 348     DE-A1- 19 919 925**
**DE-A1- 19 946 476     US-A- 4 384 195**

**Beschreibung**

Die Erfindung betrifft einen entfernungsmessenden Sensor nach dem Oberbegriff von Anspruch 1.

Optoelektronische entfernungsmessende Sensoren sind als einstrahlige Taster bekannt, mit denen die Entfernung zu einem anvisierten Ziel oder Entfernungen zu Objekten längs einer Überwachungsstrecke mit Hilfe eines Lichtlaufzeitverfahrens gemessen werden.

Zahlreiche Sensoren nutzen ein Signallaufzeitprinzip, bei dem die Signallaufzeit, also das Zeitintervall zwischen Senden und Empfang eines Signals, über die Ausbreitungsgeschwindigkeit in eine Entfernung umgerechnet wird. Dabei werden so verschiedene Frequenzbereiche des elektromagnetischen Spektrums ausgenutzt wie Mikrowellen und Licht. Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor. Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten.

Zur Abstandsbestimmung wird die Lichtlaufzeit zwischen Aussenden und Empfangen eines Lichtsignals gemessen, das von einer Oberfläche in dem Überwachungsbereich remittiert oder reflektiert wird. Herkömmlich unterscheidet man zwei Verfahren, nämlich Pulslaufzeitverfahren und Phasenverfahren. In Pulslaufzeitverfahren werden einzelne kurze Lichtpulse ausgesandt und deren Laufzeit anhand eines Charakteristikums des Pulses, beispielsweise dessen Maximum bestimmt. Bei einem Phasenverfahren wird das Licht amplitudenmoduliert und die Phasenverschiebung des ausgesandten gegenüber dem empfangenen Licht ausgewertet. Phasenverfahren haben zunächst einen durch die verwandte Modulationsfrequenz des Lichts begrenzten Eindeutigkeitsbereich, der aber durch zusätzliche Maßnahmen erweitert werden kann.

Die EP 2 180 348 A1 offenbart ein Sicherheitslichtgitter und ein Verfahren zur Überwachung eines Schutzbereichs mit wenigstens zwei Sende-/Empfangsleisten.

Die EP 1 089 030 B1 und die DE 199 46 476 A1 offenbaren ein Verfahren zum Überwachen eines Schutzbereichs, bei dem zumindest ein Lichtsignal durch den Schutzbereich hindurch in Richtung eines den Schutzbereich zumindest bereichsweise begrenzenden Begrenzungselement ausgesandt wird, das Lichtsignal von dem Begrenzungselement zu einem Lichtempfänger reflektiert oder remittiert wird, die Lichtlaufzeit vom Aussenden bis zum Empfangen des Lichtsignals ermittelt wird und ein Unterbrechungssignal erzeugt wird, wenn die ermittelte Lichtlaufzeit von einer vorbestimmten Maximal-Lichtlaufzeit zumindest um einen vorgegebenen Schwellenwert abweicht.

Eine Aufgabe der Erfindung besteht darin, einen verbesserten entfernungsmessenden optoelektronischen Sensor zu Abstandsbestimmung bereitzustellen, wobei eine bessere Objekterkennung ermöglicht und eine schnellere Auswertung direkt im entfernungsmessenden Sensor ermöglicht werden soll. Eine weitere Aufgabe besteht darin, eine robustere Objekterkennung bereitzustellen.

Die Aufgabe wird gemäß Anspruch 1 gelöst durch einen entfernungsmessenden optoelektronischen Sensor zur Abstandsbestimmung von Objekten aufgrund der Lichtlaufzeit in einem Überwachungsbereich, mit einem Lichtsender zum Aussenden eines Sendelichtstrahls, einem Lichtempfänger zum Erzeugen eines Empfangssignals aus von Objekten in dem Überwachungsbereich remittiertem oder reflektiertem Sendelicht, einem A/D-Wandler zum Abtasten des Empfangssignals und einer Auswerteeinheit zum Auswerten des Empfangssignals, wobei die Sendelichtstrahlen zyklisch ausgesendet, und die Empfangssignale zyklisch empfangen werden, wobei ein Speicher vorhanden ist, um die Empfangssignale abzuspeichern, wobei in dem Speicher Referenzempfangssignale abgespeichert sind, wobei die Auswerteeinheit dazu ausgebildet ist, die Empfangssignale und die Referenzempfangssignale zu vergleichen, wobei die Auswerteeinheit dazu ausgebildet ist, abhängig von dem Vergleich mindestens ein Objektfeststellungssignal an einem Signalausgang auszugeben, wobei das Objektfeststellungssignal angibt, ob die Referenzempfangssignale mit den Empfangssignalen in einem Toleranzbereich übereinstimmen oder nicht, wodurch ein zulässiges Objekt oder ein unzulässiges Objekt ermittelbar ist, wobei die Auswerteeinheit dazu ausgebildet ist, in einem ersten Schritt durch Abtastung des Objekts mit Vorabtastempfangssignalen die Länge des Objektes festzustellen, wobei das Objekt an dem Sensor vorbeibewegt wird und die Auswerteeinheit dazu ausgebildet ist, in einem zweiten Schritt durch Abtastung des Objektes Referenzempfangssignale einer Objektkontur, innerhalb der Länge des Objektes festzustellen, wobei das Objekt erneut an dem Sensor vorbeibewegt wird, wobei die Auswerteeinheit (12) dazu ausgebildet ist, aufgrund der Vorabtastempfangssignale (26) die Abtastzeitpunkte der Referenzempfangssignale (20) festzulegen.

Durch die Abtastung des Objektes mit Vorabtastempfangssignalen kann von der Auswerteeinheit die Objektlänge und insbesondere eine grobe Objektkontur erfasst werden. Abhängig von diesen Größen kann im Anschluss daran eine genaue Abtastung des Objektes mit den Referenzempfangssignalen erfolgen. Dabei kann eine begrenzte Anzahl von möglichen Referenzempfangssignalen optimal von dem zu erfassenden Objekt aufgenommen werden, da die Länge des Objektes bereits bekannt ist und auch ggf. bereits eine grobe Objektkontur vorliegt. Daher können die Referenzempfangssignale optimal entlang des Objektes verteilt werden.

Die Vorabtastempfangssignale und die Referenzempfangssignale werden beispielsweise mittels eines Teach-In-Vorgangs ermittelt. Hierfür kann am entfernungsmessenden optoelektronischen Sensor ein entsprechendes Betätigungsmittel bzw. ein Taster vorgesehen sein, welcher einen Teach-In-Modus aktiviert. Im Rahmen des Teach-In-Vorgangs kann dann das einzulernende Objekt beispielsweise mit gleicher Geschwindigkeit wie bei der Objekterfassung aufgrund der Empfangssignale oder mit einer geringeren Geschwindigkeit an dem Sensor vorbeibewegt werden. Dabei können die Referenzempfangssignale abhängig von den Vorabtastsignalen mit unterschiedlicher Verteilung bzw. unterschiedlicher Dichte aufgenommen werden.

Gemäß der Erfindung ist die Auswerteeinheit dazu ausgebildet, aufgrund der Vorabtastempfangssignale die Abtastzeitpunkte der Referenzempfangssignale festzulegen. Dadurch ist es möglich, eine nicht kontinuierliche Abtastung des Objektes vorzunehmen. Beispielsweise werden die Referenzempfangssignale bevorzugt am Anfang und am Ende des Objektes, sowie an Öffnungen oder Unterbrechungen der Kontur des Objektes sowie kurz vor und kurz nach steilen Kanten eines Objektes und bei großen Steigungsänderungen der Objektform aufgenommen. Dadurch wird eine maximale Anzahl von möglichen Abtastungen optimal auf das zumindest zu erwartende zulässige abzutastende Objekt verteilt, um eine optimale Auflösung der Objektkontur zu erhalten.

Gemäß der Erfindung ist die Auswerteeinheit in einem Gehäuse des entfernungsmessenden optoelektronischen Sensors integriert.

Gemäß einer bevorzugten Ausführungsform der Erfindung ist die Auswerteeinheit dazu ausgebildet, aufgrund einer Differenzbildung von Referenzempfangssignalen und Empfangssignalen ein zulässiges oder unzulässiges Objekt zu ermitteln. Eine Differenzbildung ist eine besonders einfache Möglichkeit, wodurch eine Unterscheidung von zulässigen und unzulässigen Objekten ermittelbar ist. Ist die Differenz von Referenzempfangssignalen und Empfangssignalen betragsmäßig innerhalb eines Toleranzbereiches und unterhalb eines vorbestimmten Schwellwertes, so wird das Objekt als zulässiges Objekt klassifiziert. Ist die Differenz von Referenzempfangssignalen und Empfangssignalen betragsmäßig innerhalb eines Toleranzbereiches und oberhalb eines vorbestimmten Schwellwertes, so wird das Objekt als unzulässiges Objekt klassifiziert. Dadurch ist eine sehr einfache Unterscheidung von zulässigen und unzulässigen Objekten bereitgestellt.

Eine Differenzbildung kann beispielsweise nach folgender Formel erfolgen, wonach 'Teach' die Referenzempfangssignale sind und 'Shape' die Empfangssignale und 'i' der laufende Index:

$$\sum_{i=0}^{N} |Teach_i - Shape_i|$$

Gemäß einer alternativen Ausführungsform ist die Auswerteeinheit dazu ausgebildet, aufgrund einer Multiplikation von Referenzempfangssignalen und Empfangssignalen ein zulässiges oder unzulässiges Objekt zu ermitteln. Anstatt der Differenzbildung der einzelnen Abtastpunkte wird gemäß dieser Ausführung eine Multiplikation der einzelnen Abtastpunkte der Referenzempfangssignale und der Abtastpunkte der Empfangssignale durchgeführt. Auch diese Rechenoperation ist durch die Auswerteeinheit einfach durchführbar.

Gemäß einer weiteren alternativen Ausführungsform ist die Auswerteeinheit dazu ausgebildet, aufgrund einer ersten Ableitung von Referenzempfangssignalen und einer ersten Ableitung von Empfangssignalen ein zulässiges oder unzulässiges Objekt zu ermitteln. Auch diese Rechenoperation ist durch die Auswerteeinheit einfach durchführbar.

Gemäß einer Weiterbildung der Erfindung ist die Auswerteeinheit dazu ausgebildet, aufgrund der Vorabtastempfangssignale die Anzahl der Abtastpunkte der Referenzempfangssignale zu festzulegen. Gemäß dieser Ausführung kann die Anzahl der Abtastpunkte an die Komplexität der Abtastkontur angepasst werden. Ist die Objektkontur wenig komplex, beispielsweise bei einer einfachen geometrischen Form kann die Anzahl der Abtastpunkte niedrig gewählt werden. Beispielsweise können lediglich ca. 8 bis ca. 64 Abtastpunkte vorgesehen werden. Dadurch kann die Auswertezeit erheblich verkürzt werden. Ist die Objektkontur komplexer oder hochkomplex, wie beispielsweise eine geometrisch unregelmäßige Objektkontur, kann die Anzahl der Abtastpunkte hoch gewählt werden. Beispielsweise können lediglich ca. 64 bis ca. 256 oder mehr Abtastpunkte vorgesehen werden. Dadurch wird die Auswertezeit zwar geringfügig erhöht, jedoch ist eine genauere Objekterkennung gewährleistet.

In Weiterbildung der Erfindung ist die Auswerteeinheit dazu ausgebildet, aufgrund der Vorabtastsignale einen Messbereich und/oder eine Distanzauflösung der Referenzempfangssignale festzulegen. Dadurch ist es möglich, zumindest für ein zu erwartendes zulässiges Objekt den Messbereich und/oder eine Distanzauflösung optimal an das zulässige Objekt anzupassen, um möglichst genaue Distanzwerte zu erhalten, wodurch die Objektklassifizierung bzw. Objekterkennung verbessert wird.

Gemäß einer bevorzugten Ausführungsform ist die Auswerteeinheit dazu ausgebildet, mehrere gleichartige Objekte nacheinander abzutasten, um Referenzempfangssignale von mehreren Objekten zu erhalten und die Auswerteeinheit ist dazu ausgebildet, aus den Referenzempfangssignalen an identischen Objektpositionen verschiedener Objekte jeweils ein Mittelwert zu ermitteln. Dadurch ist es möglich einen Toleranzbereich zu definieren der von den zwar gleichartigen jedoch geringfügig unterschiedlichen zulässigen Objekten bestimmt wird. Dadurch ist die Auswerteeinheit in der Lage, geringfügige Objektkonturabweichungen oder geringfügige Objektpositionsabweichungen zu tolerieren. Die Auswerteeinheit bestimmt dabei automatisch den Toleranzbereich ausgehend von den Referenzempfangssignalen der gleichartigen zulässigen Objekte.

In Weiterbildung der Erfindung ist die Auswerteeinheit dazu ausgebildet, erste Referenzempfangssignale eines erstes Objekt als erstes Referenzobjekt mit einer höchsten Objektkonturübereinstimmung und zweite Referenzempfangssignale eines zweiten Objektes als zweites Referenzobjekt mit einer geringsten Objektkonturübereinstimmung einzulernen, wobei die Auswerteeinheit ausgebildet ist, aus der Differenz der ersten Referenzempfangssignale und der zweiten Referenzempfangssignale erlaubte Toleranzwerte zu ermitteln. Dadurch ist es möglich, mit nur zwei Referenzobjekten finale Toleranzwerte eines Toleranzbereiches zu bestimmen. Dadurch kann der Sensor sehr einfach und schnell eingelernt werden.

Gemäß einer besonders bevorzugten Ausführungsform ist eine Objektbewegungsgeschwindigkeit konstant. Dadurch ist der Abtastungsmaßstab für verschiedene Objekte immer gleich. Die konstante Objektbewegungsgeschwindigkeit braucht dem Sensor bzw. der Auswerteeinheit gemäß dieser Ausführungsform gar nicht bekannt zu sein. Da alle Objekte eine identische Objektgeschwindigkeit aufweisen, treten keine Objektverzerrungen auf, wodurch immer ein korrekter Objektkonturvergleich ermöglicht wird.

In Weiterbildung ist ein externes Triggersignal einlesbar, um variierende Objektbewegungsgeschwindigkeit zu detektieren. Über das externe Triggersignal wird dem Sensor dann die aktuell verwendete Objektbewegungsgeschwindigkeit mitgeteilt. Ausgehend von der aktuell verwendeten Objektbewegungsgeschwindigkeit können die Empfangssignale mit den Referenzempfangssignalen verglichen werden und eine Verzerrung durch eine Stauchung oder Spreizung ausgeglichen werden.

In Weiterbildung der Erfindung ist die Auswerteeinheit dazu ausgebildet, mehrere Referenzobjekte einzulernen und verschiedene zulässige und/oder verschiedene unzulässige Objekte zu unterscheiden. Dadurch können durch einen einzigen Sensor verschiedene unterschiedliche Objekte, die nacheinander an dem Sensor vorbeibewegt werden, unterschieden werden und unterschiedlich zugeordnet bzw. klassifiziert werden. Beispielsweise können unterschiedlich große Pakete auf einem Förderband sortiert werden, wobei eine Sortiervorrichtung durch den entfernungsmessenden optoelektronischen Sensor angesteuert wird.

Gemäß einer bevorzugten Ausführungsform ist eine Anzeigeeinheit ausgebildet, um einen Übereinstimmungsgrad der Empfangssignale zu den Referenzempfangssignalen anzugeben. Dadurch kann ein Anwender direkt am Sensor das Ergebnis eines Vergleichs ablesen.

In Weiterbildung der Erfindung ist das mindestens eine Objektfeststellungssignal ein digitales Schaltsignal. Das digitale Schaltsignal oder mehrere digitale Schaltsignale können von einer nachgeordneten Steuerung einfach eingelesen werden und weiterverarbeitet werden. Beispielsweise kann durch das digitale Schaltsignal oder die digitalen Schaltsignale direkt eine Sortiervorrichtung angesteuert werden.

Das Objektfeststellungssignal kann jedoch auch über andere Ausgänge, Schnittstellen oder Feldbusse erfolgen. Dabei kann es sich um einen Schaltausgang oder beispielsweise auch um eine IO-Link Ausgang handeln.

Geeignete Feldbusse sind beispielsweise Profibus, Interbus oder Devicenet.

IO-Link ist ein Kommunikationssystem zur Anbindung intelligenter Sensoren und Aktoren an ein Automatisierungssystem, welches in der Norm IEC 61131-9 unter der Bezeichnung ,Single-drop digital communication interface for small sensors and actuators' (SDCI) normiert ist.

In Weiterbildung der Erfindung ist das mindestens eine Objektfeststellungssignal ein kontinuierliches Analogsignal, insbesondere ein Stromsignal mit einem Wertebereich von 4 mA bis 20 mA oder insbesondere ein Spannungssignal mit einem Wertebereich von 0 V bis 10 V. Ein derartiges Analogsignal kann von einer Vielzahl von Steuerungen weiterverarbeitet werden. Dabei kann über das Analogsignal direkt ein Signal für die Vergleichsabweichung übermittelt werden. Beispielsweise kann bei einer Anwendung in einer Qualitätskontrolle das Maß der Abweichung von einer Sollkontur dem Analogsignal entnommen werden und auf diese Weise auch eine laufende Qualitätsüberwachung durchgeführt werden. Gemäß dieser Ausführung ist mindestens ein Analogausgang vorgesehen.

In Weiterbildung der Erfindung sind Eingabemittel vorhanden, wobei die Eingabemittel dazu ausgebildet sind eine Objektlänge, eine Speicherrate, einen Trigger und/oder einen Toleranzbereich einzustellen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Figur 1    ein Blockschaltbild eines beispielhaften entfernungsmessenden Sensors in einer Ausführungsform als eindimensionaler optoelektronischer Entfernungstaster;

Figur 2    einen entfernungsmessenden optoelektronischen Sensor zur Abstandsbestimmung von Objekten in einem Überwachungsbereich;

Figur 3    ein Diagramm zum Einlernen der Länge des Objektes;

Figur 4    ein Diagramm zum Einlernen einer Objektkontur;

Figur 5    eine Toleranzschwelle von 50%;

Figur 6    einen Toleranzbereich von 30% bis 90%;

In den nachfolgenden Figuren sind identische Teile mit identischen Bezugszeichen versehen.

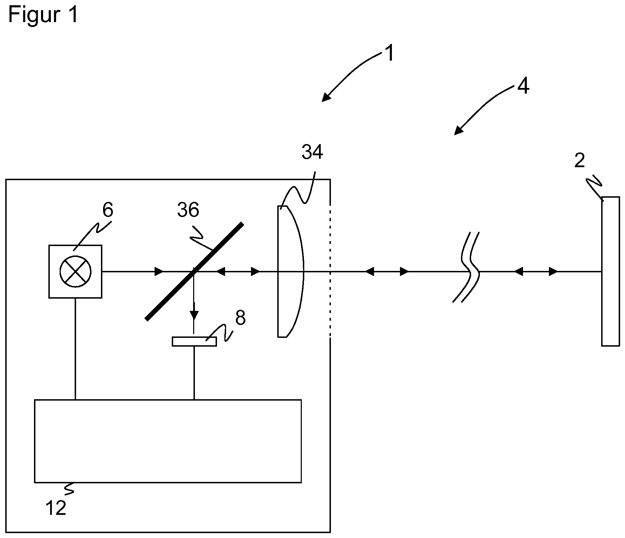

Figur 1 zeigt ein Blockschaltbild eines beispielhaften entfernungsmessenden Sensors 1 in einer Ausführungsform als eindimensionaler optoelektronischer Entfernungstaster. Ein Lichtsender 6 ist so ausgerichtet, dass sein Sendelicht einen Teilerspiegel 36 transmittiert und anschließend über eine Optik 34 in einen Überwachungsbereich 4 gelangt. Dort wird das Sendelicht, wenn sich ein Objekt 2 im Strahlengang befindet, an diesem Objekt 2 reflektiert oder remittiert und kehrt erneut durch die Optik 2 zu dem Teilerspiegel 36 zurück, wo es in einem Lichtempfänger 8 gespiegelt und dort erfasst wird. Die Teilerspiegelanordnung 36 ist rein beispielhaft zu verstehen, die Erfindung umfasst ebenso andere Anordnungen ohne Teilerspiegel 36 wie beispielsweise Doppelaugen. Auch die Erläuterung an einem eindimensionalen optoelektronischen Sensor ist nur exemplarisch zu verstehen, denn ebenso kann der Sensor ein mehrdimensionales System sein, wie ein Lichtgitter oder ein Laserscanner, oder mit gänzlich anderen elektromagnetischen Signalen arbeiten, wie beispielsweise ein TDR-Füllstandssensor.

Eine Auswerteeinheit 12 steuert den Lichtsender 6 an und wertet die Signale des Lichtempfängers 8 aus. Um für eine Abstandsmessung des Objekts 2 eine Lichtlaufzeit zu ermitteln, werden Lichtpulse ausgesandt und wieder empfangen und die Differenz zwischen Sende- und Empfangszeitpunkt wird bestimmt. Diese Auswertung erfolgt aber nicht zwingend auf Basis von Einzelereignissen mit nur einem einzigen Lichtpuls, sondern in einer Auswertung mittels eines Histogramms, das von einer Vielzahl von Einzelereignissen gebildet wird. Unter Empfangssignal wird also gemäß vorliegender Erfindung sowohl ein einziger Lichtimpuls, eine Lichtimpulsgruppe oder aber auch ein Signal aufgrund einer Histogrammauswertung verstanden.

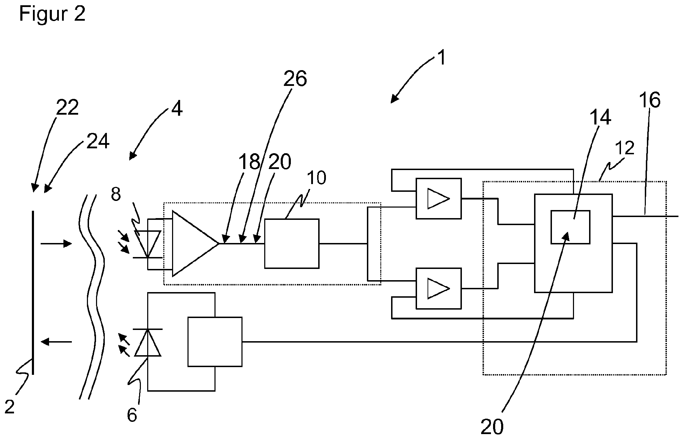

Figur 2 zeigt einen entfernungsmessenden optoelektronischen Sensor 1 zur Abstandsbestimmung von Objekten 2 aufgrund der Lichtlaufzeit in einem Überwachungsbereich 4, mit einem Lichtsender 6 zum Aussenden eines Sendelichtstrahls, einem Lichtempfänger 8 zum Erzeugen eines Empfangssignals 18 aus von Objekten 2 in dem Überwachungsbereich 4 remittiertem oder reflektiertem Sendelicht, einem A/D-Wandler 10 zum Abtasten des Empfangssignals 18 und einer Auswerteeinheit 12 zum Auswerten des Empfangssignals 18, wobei die Sendelichtstrahlen zyklisch ausgesendet, und die Empfangssignale 18 zyklisch empfangen werden, wobei ein Speicher 14 vorhanden ist, um die Empfangssignale 18 abzuspeichern, wobei in dem Speicher 14 Referenzempfangssignale 20 abgespeichert sind, wobei die Auswerteeinheit 12 dazu ausgebildet ist, die Empfangssignale 18 und die Referenzempfangssignale 20 zu vergleichen, wobei die Auswerteeinheit 12 dazu ausgebildet ist, abhängig von dem Vergleich mindestens ein Objektfeststellungssignal an einem Signalausgang 16 auszugeben, wobei das Objektfeststellungssignal angibt, ob die Referenzempfangssignale 20 mit den Empfangssignalen 18 in einem Toleranzbereich übereinstimmen oder nicht, wodurch ein zulässiges Objekt 22 oder ein unzulässiges Objekt 24 ermittelbar ist, wobei die Auswerteeinheit 12 dazu ausgebildet ist, in einem ersten Schritt durch Abtastung des Objekts 2 mit Vorabtastempfangssignalen 26 die Länge des Objektes 2 festzustellen, wobei das Objekt 2 an dem Sensor 1 vorbeibewegt wird und die Auswerteeinheit 12 dazu ausgebildet ist, in einem zweiten Schritt durch Abtastung des Objektes 2 Referenzempfangssignale 20 einer Objektkontur, innerhalb der Länge des Objektes 2 festzustellen, wobei das Objekt 2 erneut an dem Sensor vorbeibewegt wird.

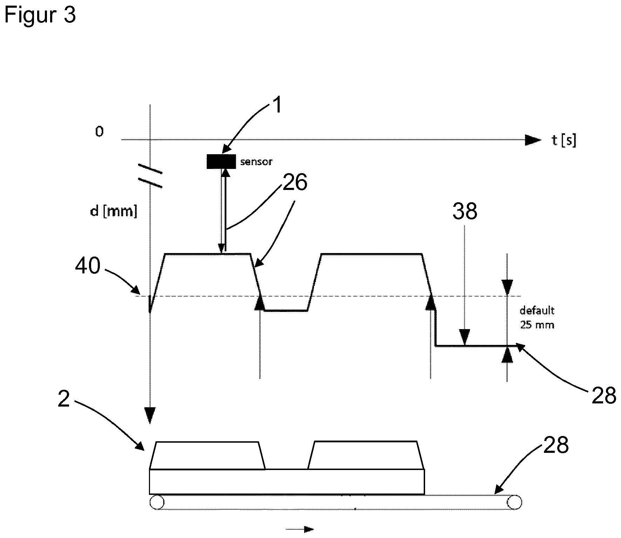

Figur 3 zeigt ein Diagramm zum Einlernen der Länge des Objektes 2. Die Auswerteeinheit ist dazu ausgebildet, in einem ersten Schritt durch Abtastung des Objekts 2 mit Vorabtastempfangssignalen 26 die Länge des Objektes 2 festzustellen, wobei das Objekt 2 an dem Sensor 1 vorbeibewegt wird. Bei einem Einlernen der Länge des Objektes 2 wird optional als erstes der Hintergrund 38, beispielsweise ein Förderband 28 bestimmt. Hierzu wird in Abhängigkeit der Abtastrate eine Anzahl an Messwerten bzw. Empfangssignalen gesammelt und ein Mittelwert bestimmt. Ein Abstand zwischen Untergrund, also Förderbandoberfläche und einer Triggerschwelle beträgt beispielsweise 25 mm und ist im Sensor parametrierbar.

Eine Dauer der Einlernphase der Objektlänge bestimmt ein Anwender selbst. Sobald beispielsweise die Triggerschwelle 40 unterschritten wird, beginnt die Abtastung des Objekts 2. Eine aktuelle Anzahl von Vorabtastempfangssignalen 26 wird beispielsweise in einer Variablen A gespeichert. Bei Überschreiten der Triggerschwelle 40 wird die Variable A, welche die aktuelle Anzahl der Vorabtastempfangssignale 26 enthält in die Variable B kopiert. Die Variable B im Speicher hält somit die potentielle Länge des Objektes 2 in Form von Abtastpunkten. Bei abermaliger Unterschreitung und nachfolgender Überschreitung der Triggerschwelle 40, wird die Variable B aktualisiert. Unterschreitet der Distanzwert des Vorabtastempfangssignals 26 während des Einlernvorganges nicht die Triggerschwelle 40, ist der Einlernvorgang ungültig. Dies wird beispielsweise nach dem Beenden des Einlernvorganges der Objektlänge durch die Anzeigemittel signalisiert.

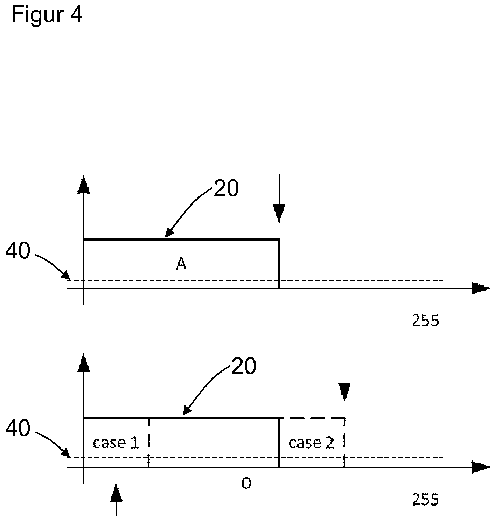

Figur 4 zeigt ein Diagramm zum Einlernen einer Objektkontur. Die Auswerteeinheit ist dazu ausgebildet, in einem zweiten Schritt durch Abtastung des Objektes Referenzempfangssignale 20 der Objektkontur, innerhalb der Länge des Objektes festzustellen, wobei das Objekt erneut an dem Sensor vorbeibewegt wird.

Es kann nur eine Objektkontur eingelernt werden, wenn zuvor eine Länge des Objektes mittels Vorabtastempfangssignalen stattgefunden hat. Liegt beispielsweise keine Länge des Objektes vor wird die Erfassung der Objektkontur direkt mit einer Fehlermeldung an der Anzeigeeinheit beendet.

Hat jedoch eine Erfassung der Länge des Objektes stattgefunden, tastet der Sensor beispielsweise nach Unterschreitung der Triggerschwelle 40 das Objekt ab und legt die Referenzempfangssignale 20 in dem Speicher ab. Während der Abtastung wird beispielsweise jeder Messwert einer Plausibilitätsprüfung unterzogen. Nach Aufzeichnung von beispielsweise 256 Abtastpunkten bzw. Referenzempfangssignalen 20 wird eine Verarbeitung dieser Referenzdaten in der Auswerteeinheit gestartet. Nicht genutzte Abtastpunkte werden im Speicher zu 0 gesetzt, da beispielsweise bei 194 gültigen Abtastpunkten 62 Abtastpunkte den Hintergrund, bzw. das Förderband betreffen. Der Hintergrund bzw. das Förderband soll nicht in das Vergleichsergebnis einfließen. Figur 4 verdeutlicht die Nullsetzung der Abtastpunkte.

Wenn eine Geschwindigkeit bei einem Einlernen der Objektkontur schneller war als beim Einlernen der Länge des Objektes, ist die erfasste Objektkontur gestaucht. Alle Abtastpunkte werden bis zu dem Abtastpunkt, der als erstes die Triggerschwelle unterschreitet zu 0 gesetzt, entsprechend dem 'case 1' aus Figur 4.

War die Geschwindigkeit beim Einlernen der Objektkontur langsamer als beim Einlernen der Länge des Objektes, ist die Objektkontur gestreckt. Ist die Anzahl der Abtastpunkte bzw. Referenzempfangssignale 20 der Objektkontur größer als die Anzahl der Abtastpunkte bzw. Vorabtastempfangssignale der Länge des Objektes, wird die Anzahl der Abtastpunkte der Objektkontur auf die Anzahl der Abtastpunkte der Länge des Objektes gesetzt, entsprechend dem 'case 2' von Figur 4. Anschließend wird aus den Referenzempfangssignalen 20 der Objektkontur ein Skalierungsfaktor errechnet, um die eingelernte Objektkontur beispielsweise auf 256 Werte zu skalieren.

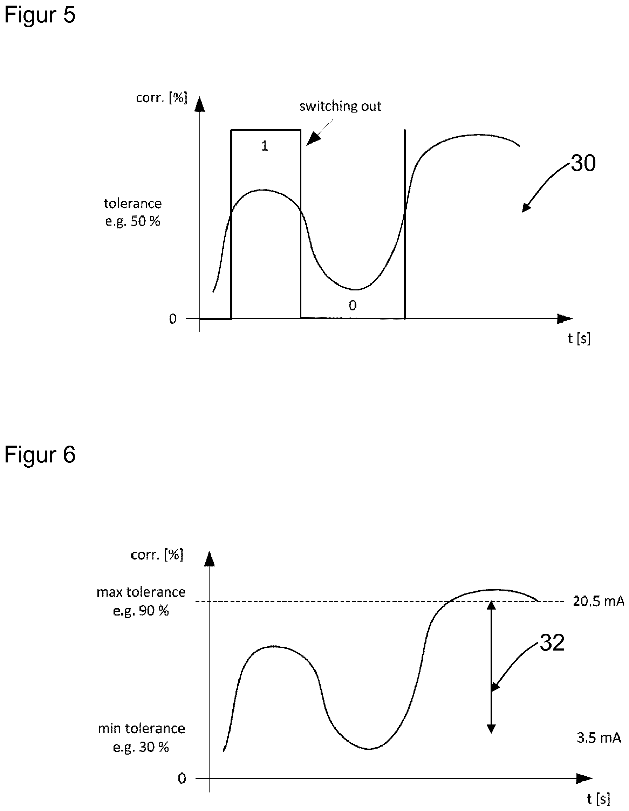

Figur 5 zeigt eine Toleranzschwelle 30 von 50%. Die Auswerteeinheit ist dazu ausgebildet, erste Referenzempfangssignale eines erstes Objekt als erstes Referenzobjekt mit einer höchsten Objektkonturübereinstimmung und zweite Referenzempfangssignale eines zweiten Objektes als zweites Referenzobjekt mit einer geringsten Objektkonturübereinstimmung einzulernen, wobei die Auswerteeinheit ausgebildet ist, aus der Differenz der ersten Referenzempfangssignale und der zweiten Referenzempfangssignale erlaubte Toleranzwerte bzw. eine Toleranzschwelle 30 zu ermitteln. Die Toleranzschwelle 30 von 50% gemäß Figur 5 definiert die Schaltschwelle für ein digitales Objektfeststellungssignals des Signalausgangs.

Figur 6 zeigt einen Toleranzbereich 32 von 30% bis 90% für ein analoges Objektfeststellungssignal des Signalausgangs.

Bezugszeichen:

1 Entfernungsmessender optoelektronischer Sensor
2 Objekt
4 Überwachungsbereich
6 Lichtsender
8 Lichtempfänger
10 A/D-Wandler
12 Auswerteeinheit
14 Speicher
16 Signalausgang
18 Empfangssignal
20 Referenzempfangssignal
22 zulässiges Objekt
24 unzulässiges Objekt
26 Vorabtastempfangssignale
28 Förderband
30 Toleranzschwelle
32 Toleranzbereich
34 Optik
36 Teilerspiegel
38 Hintergrund
40 Triggerschwelle

**Patentansprüche**

1. Entfernungsmessender optoelektronischer Sensor zur Abstandsbestimmung von Objekten (2) aufgrund der Lichtlaufzeit in einem Überwachungsbereich (4), mit einem Lichtsender (6) zum Aussenden eines Sendelichtstrahls, einem Lichtempfänger (8) zum Erzeugen eines Empfangssignals (18) aus von Objekten (2) in dem Überwachungsbereich (4) remittiertem oder reflektiertem Sendelicht, einem A/D-Wandler (10) zum Abtasten des Empfangssignals und einer Auswerteeinheit (12) zum Auswerten des Empfangssignals (18), wobei die Sendelichtstrahlen zyklisch ausgesendet, und die Empfangssignale (18) zyklisch empfangen werden, wobei ein Speicher (14) vorhanden ist, um die Empfangssignale (18) abzuspeichern, wobei in dem Speicher (14) Referenzempfangssignale (20) abgespeichert sind,

wobei die Auswerteinheit (12) dazu ausgebildet ist, die Empfangssignale (18) und die Referenzempfangssignale (20) zu vergleichen,

wobei die Auswerteeinheit (12) dazu ausgebildet ist, abhängig von dem Vergleich mindestens ein Objektfeststellungssignal an einem Signalausgang (16) auszugeben, wobei das Objektfeststellungssignal angibt, ob die Referenzempfangssignale (20) mit den Empfangssignalen (18) in einem Toleranzbereich übereinstimmen oder nicht, wodurch ein zulässiges Objekt (22) oder ein unzulässiges Objekt (24) ermittelbar ist, wobei

die Auswerteeinheit (12) dazu ausgebildet ist, in einem ersten Schritt durch Abtastung des Objekts (2) mit Vorabtastempfangssignalen (26) die Länge des Objektes (2) festzustellen, wobei das Objekt (2) an dem Sensor (1) vorbeibewegt wird,

**dadurch gekennzeichnet, dass** die Auswerteeinheit (12) dazu ausgebildet ist, in einem zweiten Schritt durch Abtastung des Objektes (2) Referenzempfangssignale (20) einer Objektkontur, innerhalb der Länge des Objektes (2) festzustellen, wobei das Objekt (2) erneut an dem Sensor vorbeibewegt wird, wobei die Auswerteeinheit (12) dazu ausgebildet ist, aufgrund der Vorabtastempfangssignale (26) die Abtastzeitpunkte der Referenzempfangssignale (20) festzulegen.

2. Entfernungsmessender optoelektronischer Sensor nach Anspruch 1, **dadurch gekennzeichnet, dass** die Auswerteeinheit (12) dazu ausgebildet ist, aufgrund einer Differenzbildung von Referenzempfangssignalen (20) und Empfangssignalen (18) ein zulässiges Objekt (22) oder ein unzulässiges Objekt (24) zu ermitteln.

3. Entfernungsmessender optoelektronischer Sensor nach Anspruch 1, **dadurch gekennzeichnet, dass** die Auswerteeinheit (12) dazu ausgebildet ist, aufgrund einer Multiplikation von Referenzempfangssignalen (20) und Empfangssignalen (18) ein zulässiges Objekt (22) oder ein unzulässiges Objekt (24) zu ermitteln.

4. Entfernungsmessender optoelektronischer Sensor nach Anspruch 1, **dadurch gekennzeichnet, dass** die Auswerteeinheit (12) dazu ausgebildet ist, aufgrund einer ersten Ableitung von Referenzempfangssignalen (20) und einer ersten Ableitung von Empfangssignalen (18) ein zulässiges Objekt (22) oder ein unzulässiges Objekt (24) zu ermitteln.

5. Entfernungsmessender optoelektronischer Sensor nach einem der vorhergehenden Ansprüche, **dadurch gekennzeichnet, dass** die Auswerteeinheit (12) dazu ausgebildet ist, aufgrund der Vorabtastempfangssignale (26) die Anzahl der Abtastpunkte der Referenzempfangssignale (20) zu festzulegen.

6. Entfernungsmessender optoelektronischer Sensor nach einem der vorhergehenden Ansprüche, **dadurch gekennzeichnet, dass** die Auswerteeinheit (12) dazu ausgebildet ist, aufgrund der Vorabtastempfangssignale (26) einen Messbereich und/oder eine Distanzauflösung der Referenzempfangssignale (20) festzulegen.

7. Entfernungsmessender optoelektronischer Sensor nach einem der vorhergehenden Ansprüche, **dadurch gekennzeichnet**, das die Auswerteeinheit (12) dazu ausgebildet ist, mehrere gleichartige Objekte (2) nacheinander abzutasten, um Referenzempfangssignale (20) von mehreren Objekten zu erhalten und die Auswerteeinheit (12) dazu ausgebildet ist, aus den Referenzempfangssignalen (20) an identischen Objektpositionen verschiedener Objekte (2), jeweils ein Mittelwert zu ermitteln.

8. Entfernungsmessender optoelektronischer Sensor nach einem der vorhergehenden Ansprüche, **dadurch gekennzeichnet, dass** die Auswerteeinheit (12) dazu ausgebildet ist, erste Referenzempfangssignale (20) eines ersten Objekts (2) als erstes Referenzobjekt mit einer höchsten Objektkonturübereinstimmung und zweite Referenzempfangssignale (20) eines zweiten Objektes (2) als zweites Referenzobjekt mit einer geringsten Objektkonturübereinstimmung einzulernen, wobei die Auswerteeinheit (12) ausgebildet ist, aus der Differenz der ersten Referenzempfangssignale (20) und der zweiten Referenzempfangssignale (20) erlaubte Toleranzwerte zu ermitteln.

9. Entfernungsmessender optoelektronischer Sensor nach einem der vorhergehenden Ansprüche, **dadurch gekennzeichnet, dass** eine Objektbewegungsgeschwindigkeit konstant ist.

10. Entfernungsmessender optoelektronischer Sensor nach einem der vorhergehenden Ansprüche, **dadurch gekennzeichnet, dass** ein externes Triggersignal einlesbar ist, um variierende Objektbewegungsgeschwindigkeit zu detektieren.

11. Entfernungsmessender optoelektronischer Sensor nach einem der vorhergehenden Ansprüche, **dadurch gekennzeichnet, dass** die Auswerteeinheit (12) dazu ausgebildet ist, mehrere Referenzobjekte einzulernen und verschiedene zulässige Objekte (22) und/oder verschiedene unzulässige Objekte (24) zu unterscheiden.

12. Entfernungsmessender optoelektronischer Sensor nach einem der vorhergehenden Ansprüche, **dadurch gekennzeichnet, dass** eine Anzeigeeinheit ausgebildet ist, um einen Übereinstimmungsgrad der Empfangssignale (18) zu den Referenzempfangssignalen (20) anzugeben.

13. Entfernungsmessender optoelektronischer Sensor nach einem der vorhergehenden Ansprüche, **dadurch gekennzeichnet, dass** das mindestens eine Objektfeststellungssignal ein digitales Schaltsignal ist.

14. Entfernungsmessender optoelektronischer Sensor nach einem der vorhergehenden Ansprüche, **dadurch gekennzeichnet, dass** das mindestens eine Objektfeststellungssignal ein kontinuierliches Analogsignal ist, insbesondere ein Stromsignal mit einem Wertebereich von 4 mA bis 20 mA oder insbesondere ein Spannungssignal mit einem Wertebereich von 0 V bis 10 V ist.

15. Entfernungsmessender optoelektronischer Sensor nach einem der vorhergehenden Ansprüche, **dadurch gekennzeichnet, dass** Eingabemittel vorhanden sind, wobei die Eingabemittel dazu ausgebildet sind, eine Objektlänge, eine Speicherrate, einen Trigger und/oder einen Toleranzbereich einzustellen.

**Claims**

1. A distance-measuring optoelectronic sensor for the distance measurement of objects (2) on the basis of the time of flight of light in a monitored zone (4), comprising a light transmitter (6) for transmitting a transmitted light beam; a light receiver (8) for generating a received signal (18) from transmitted light remitted or reflected by objects (2) in the monitored zone (4); an A/D converter (10) for sampling the received signal; and an evaluation unit (12) for evaluating the received signal (18), wherein the transmitted light beams are transmitted cyclically and the received signals (18) are received cyclically; wherein a memory (14) is present to store the received signals (18), with reference received signals (20) being stored in the memory (14); wherein the evaluation unit (12) is configured to compare the received signals (18) and the reference received signals (20); wherein the evaluation unit (12) is configured to output at least one object determination signal at a signal output (16) in dependence on the comparison, with the object determination signal indicating whether the reference received signals (20) agree with the received signals (18) in a tolerance range or not, whereby a permitted object (22) or a non-permitted object (24) can be determined; wherein the evaluation unit (12) is configured to determine a length of the object (2) in a first step by sampling the object (2) using received pre-sampling signals (26); and wherein the object (2) is moved past the sensor (1); **characterized in that** the evaluation unit (12) is configured to determine reference received signals (20) of an object contour, within the length of the object (2), in a second step by sampling the object (2), with the object (2) again being moved past the sensor, with the evaluation unit (12) being configured to determine the sampling times of the reference received signals (20) on the basis of the received pre-sampling signals (26).

2. A distance-measuring optoelectronic sensor in accordance with claim 1, **characterized in that** the evaluation unit (12) is configured to determine a permitted object (22) or a non-permitted object (24) on the basis of forming a difference between reference received signals (20) and received signals (18).

3. A distance-measuring optoelectronic sensor in accordance with claim 1, **characterized in that** the evaluation unit (12) is configured to determine a permitted object (22) or a non-permitted object (24) on the basis of a multiplication of reference received signals (20) and received signals (18).

4. A distance-measuring optoelectronic sensor in accordance with claim 1, **characterized in that** the evaluation unit (12) is configured to determine a permitted object (22) or a non-permitted object (24) on the basis of a first derivation of reference received signals (20) and of a first derivation of received signals (18).

5. A distance-measuring optoelectronic sensor in accordance with any one of the preceding claims, **characterized in that** the evaluation unit (12) is configured to determine the number of sampling points of the reference received signals (20) on the basis of the received pre-sampling signals (26).

6. A distance-measuring optoelectronic sensor in accordance with any one of the preceding claims, **characterized in that** the evaluation unit (12) is configured to determine a measured zone and/or a distance resolution of the reference received signals (20) on the basis of the received pre-sampling signals (26).

7. A distance-measuring optoelectronic sensor in accordance with any one of the preceding claims, **characterized in that** the evaluation unit (12) is configured to successively sample a plurality of similar objects (2) in order to obtain reference received signals (20) of a plurality of objects; and the evaluation unit (12) is configured to determine a respective mean value from the reference received signals (20) at identical object positions of different objects (2).

8. A distance-measuring optoelectronic sensor in accordance with any one of the preceding claims, **characterized in that** the evaluation unit (12) is configured to teach first reference received signals (20) of a first object (2) as a first reference object having a maximum object contour conformity and to teach second reference received signals (20) of a second object (2) as a second reference object having a minimum object contour conformity, with the evaluation unit (12) being configured to determine allowed tolerance values from the difference of the first reference received signals (20) and the second reference received signals (20).

9. A distance-measuring optoelectronic sensor in accordance with any one of the preceding claims, **characterized in that** an object movement speed is constant.

10. A distance-measuring optoelectronic sensor in accordance with any one of the preceding claims, **characterized in that** an external trigger signal can be read in to detect a varying object movement speed.

11. A distance-measuring optoelectronic sensor in accordance with any one of the preceding claims, **characterized in that** the evaluation unit (12) is configured to teach a plurality of reference objects and to distinguish between different permitted objects (22) and/or different non-permitted objects (24).

12. A distance-measuring optoelectronic sensor in accordance with any one of the preceding claims, **characterized in that** a display unit is configured to indicate a degree of conformity of the received signals (18) to the reference received signals (20).

13. A distance-measuring optoelectronic sensor in accordance with any one of the preceding claims, **characterized in that** the at least one object determination signal is a digital switching signal.

14. A distance-measuring optoelectronic sensor in accordance with any one of the preceding claims, **characterized in that** the at least one object determination signal is a continuous analog signal, in particular a current signal having a value range of 4 mA to 20 mA or in particular a voltage signal having a value range of 0 V to 10 V.

15. A distance-measuring optoelectronic sensor in accordance with any one of the preceding claims, **characterized in that** input means are present, with the input means being configured to set an object length, a storage rate, a trigger and/or a tolerance range.

**Revendications**

1. Capteur optoélectronique télémétrique destiné à la détermination de l'éloignement d'objets (2) sur la base du temps de parcours de la lumière dans une zone de surveillance (4), comportant un émetteur de lumière (6) pour émettre un rayon de lumière émise, un récepteur de lumière (8) pour engendrer un signal de réception (18) à partir de la lumière émise réémise ou réfléchie par des objets (2) dans la zone de surveillance (4), un convertisseur A/N (10) pour balayer le signal de réception et une unité d'évaluation (12) pour évaluer le signal de réception (18), les rayons de lumière émise étant émis de manière cyclique, et les signaux de réception (18) étant reçus de manière cyclique, dans lequel est prévue une mémoire (14) pour mémoriser les signaux de réception (18), des signaux de réception de référence (20) étant mémorisés dans la mémoire (14),
l'unité d'évaluation (12) est réalisée pour comparer les signaux de réception (18) et les signaux de réception de référence (20),
l'unité d'évaluation (12) est réalisée pour délivrer au moins un signal de constatation d'objet à une sortie de signaux (16), en fonction de la comparaison, le signal de constatation d'objet indiquant si les signaux de réception de référence (20) coïncident ou non avec les signaux de réception (18) dans une plage de tolérance, grâce à quoi un objet autorisé (22) ou un objet non autorisé (24) peut être déterminé,
l'unité d'évaluation (12) est réalisée pour constater dans une première étape, par balayage de l'objet (2) avec des signaux de réception de balayage préliminaire (26), la longueur de l'objet (2), en faisant passer l'objet (2) devant le capteur (1), **caractérisé en ce que** l'unité d'évaluation (12) est réalisée pour constater dans une deuxième étape, par balayage de l'objet (2), des signaux de réception de référence (20) d'un contour d'objet, dans la longueur de l'objet (2), en faisant de nouveau passer l'objet (2) devant le capteur, l'unité d'évaluation (12) étant réalisée pour définir les instants de balayage des signaux de réception de référence (20) sur la base des signaux de réception de balayage préliminaire (26).

2. Capteur optoélectronique télémétrique selon la revendication 1, **caractérisé en ce que** l'unité d'évaluation (12) est réalisée pour déterminer un objet autorisé (22) ou un objet non autorisé (24) sur la base d'une formation de différence entre les signaux de réception de référence (20) et les signaux de réception (18).

3. Capteur optoélectronique télémétrique selon la revendication 1, **caractérisé en ce que** l'unité d'évaluation (12) est réalisée pour déterminer un objet autorisé (22) ou un objet non autorisé (24) sur la base d'une multiplication de signaux de réception de référence (20) et de signaux de réception (18).

4. Capteur optoélectronique télémétrique selon la revendication 1, **caractérisé en ce que** l'unité d'évaluation (12) est réalisée pour déterminer un objet autorisé (22) ou un objet non autorisé (24) sur la base d'une première dérivée de signaux de réception de référence (20) et d'une première dérivée de signaux de réception (18).

5. Capteur optoélectronique télémétrique selon l'une des revendications précédentes, **caractérisé en ce que** l'unité d'évaluation (12) est réalisée pour définir le nombre de points de balayage des signaux de réception de référence (20) sur la base des signaux de réception de balayage préliminaire (26).

6. Capteur optoélectronique télémétrique selon l'une des revendications précédentes, **caractérisé en ce que** l'unité d'évaluation (12) est réalisée pour définir une zone de mesure et/ou une résolution en distance des signaux de réception de référence (20) sur la base des signaux de réception de balayage préliminaire (26).

7. Capteur optoélectronique télémétrique selon l'une des revendications précédentes, **caractérisé en ce que** l'unité d'évaluation (12) est réalisée pour balayer successivement plusieurs objets (2) similaires pour obtenir des signaux de réception de référence (20) de plusieurs objets et **en ce que** l'unité d'évaluation est réalisée pour déterminer une valeur moyenne respective à partir des signaux de réception de référence (20) à des positions d'objets identiques de différents objets (2)

8. Capteur optoélectronique télémétrique selon l'une des revendications précédentes, **caractérisé en ce que** l'unité d'évaluation (12) est réalisée pour apprendre des premiers signaux de réception de référence (20) d'un premier objet (2) en tant que premier objet de référence avec une coïncidence de contour d'objet la plus élevée et pour apprendre des seconds signaux de réception de référence (20) d'un second objet (2) en tant que second objet de référence avec une coïncidence de contour d'objet la plus faible, l'unité d'évaluation (12) étant réalisée pour déterminer des valeurs de tolérances admises à partir de la différence des premiers signaux de réception de référence (20) et des seconds signaux de réception de référence (20).

9. Capteur optoélectronique télémétrique selon l'une des revendications précédentes, **caractérisé en ce qu'**une vitesse de déplacement d'objet est constante.

10. Capteur optoélectronique télémétrique selon l'une des revendications précédentes, **caractérisé en ce qu'**un signal de déclenchement externe peut être lu pour détecter une vitesse de déplacement d'objet variable.

11. Capteur optoélectronique télémétrique selon l'une des revendications précédentes, **caractérisé en ce que** l'unité d'évaluation (12) est réalisée pour apprendre plusieurs objets de référence et pour distinguer différents objets autorisés (22) et/ou différents objets non autorisés (24).

12. Capteur optoélectronique télémétrique selon l'une des revendications précédentes, **caractérisé en ce qu'**une unité d'affichage est réalisée pour indiquer un degré de coïncidence entre les signaux de réception (18) et les signaux de réception de référence (20).

13. Capteur optoélectronique télémétrique selon l'une des revendications précédentes, **caractérisé en ce qu'**au moins un signal de constatation d'objet est un signal de commutation numérique.

14. Capteur optoélectronique télémétrique selon l'une des revendications précédentes, **caractérisé en ce que** ledit au moins un signal de constatation d'objet est un signal analogique continu, en particulier un signal de courant avec une plage de valeurs de 4 mA à 20 mA ou en particulier un signal de tension avec une plage de valeurs de 0 V à 10 V.

15. Capteur optoélectronique télémétrique selon l'une des revendications précédentes, **caractérisé en ce que** des moyens de saisie sont prévus, les moyens de saisie étant réalisés pour établir une longueur d'objet, une fréquence de mémorisation, un déclencheur et/ou une plage de tolérance.

Figur 1

Figur 2

Figur 3

Figur 4

## Figur 5

## Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2180348 A1
- EP 1089030 B1
- DE 19946476 A1